# EUROPEAN PATENT APPLICATION

(11) **EP 4 099 776 A1**
(43) Date of publication of application: **07.12.2022**
(21) Application number: 20916595.0
(22) Date of filing: 27.01.2020
(51) Int. Cl.: H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: KUMAGAI, Shinya, Tokyo 100-6150 (JP); NAGATA, Satoshi, Tokyo 100-6150 (JP); TAKAHASHI, Hideaki, Tokyo 100-6150 (JP); WANG, Lihui, Beijing 100190 (CN); ZHANG, Xiaohong, Beijing 100190 (CN)
(74) Representative: Hoffmann Eitle
(86) International application number: PCT/JP2020/002839
(87) International publication number: WO 2021/152674

(57) **Abstract**

A terminal according to an aspect of the present disclosure includes a receiving section that receives at least one of first information related to a size of a bandwidth used for reception of a DL signal and second information related to a position of the bandwidth, and a control section that controls reception of the DL signal, based on at least one of the first information and the second information. The size of the bandwidth is equal to or larger than a size of a bandwidth to which a synchronization signal block is mapped and smaller than a bandwidth size of a DL supported in Rel. 15.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15, a bandwidth (for example, a mandatory BW) and the like necessary at least for the UE to perform communication are defined. In contrast, in future radio communication systems (for example, Rel. 17 or later versions), introduction of a terminal supporting various use cases such as IoT is assumed.

Depending on a use case, it can be considered that a required condition (for example, UE capability or terminal capability) defined in Rel. 15 is not necessarily required. Accordingly, it can also be considered that a required condition is reduced depending on a use case. However, how to control configuration of the required condition or UE operation in the required condition has not yet been fully studied. In order to flexibly support various use cases in future radio communication systems, the required condition, the UE operation, or the like needs to be appropriately controlled.

In view of this, the present disclosure has one object to provide a terminal, a radio communication method, and a base station that enable appropriate support of various use cases in future radio communication systems.

### Solution to Problem

A terminal according to an aspect of the present disclosure includes a receiving section that receives at least one of first information related to a size of a bandwidth used for reception of a DL signal and second information related to a position of the bandwidth, and a control section that controls reception of the DL signal, based on at least one of the first information and the second information. The size of the bandwidth is equal to or larger than a size of a bandwidth to which a synchronization signal block is mapped and smaller than a bandwidth size of a DL supported in Rel. 15.

### Advantageous Effects of Invention

According to an aspect of the present disclosure, various use cases can be appropriately supported in future radio communication systems.

### Brief Description of Drawings

FIG. 1 is a diagram to show an example of a mandatory BW in Rel. 15;
FIG. 2 is a diagram to show an example of the mandatory BW used for an NR light device;
FIG. 3 is a diagram to show an example of a bandwidth configured for the NR light device;
FIGS. 4A and 4B are each a diagram to show another example of the bandwidth configured for the NR light device;
FIGS. 5A and 5B are each a diagram to show an example of transmission of data of a synchronization signal block;
FIG. 6 is a diagram to show an example of reception control of a DL signal with switching being applied to the mandatory BW;
FIG. 7 is a diagram to show another example of reception control of a DL signal with switching being applied to the mandatory BW;
FIG. 8 is a diagram to show another example of reception control of a DL signal with switching being applied to the mandatory BW;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

### Description of Embodiments

### (Use Cases)

In future radio communication systems (for example, 3GPP Rel. 17 or later versions), using a communication system introduced in NR (for example, Rel. 15) in use cases such as IoT has been assumed. As the use cases of IoT, for example, application to new use cases have also been under study, in addition to a smart home, smart water, an electricity meter, and a smart signal, which are known use cases of IoT (for example, using an LTE terminal).

Examples of new use cases may include an industrial wireless sensor NW (Industry wireless sensor NW (IWSN)), a video surveillance system, and a wearable device.

It is also assumed that conditions or capabilities (for example, terminal capability, UE capability, or required condition) that are required for a terminal applied to these use cases are reduced compared to conditions or capabilities that are required for a device (for example, also referred to as an NR device or an NR terminal) defined or supported in Rel. 15. Such a device whose terminal capability is reduced compared to that of an NR device may be referred to as a capability reduced NR device, a reduced capability NR device, an NR light device, an NR light terminal, an NR light, or the like. In the following description, a device whose terminal capability is reduced compared to that of an NR device is referred to as an NR light device; however, another term may be used instead.

The NR light device may have a configuration of including less transmit antennas and receive antennas than those of the NR device. The NR light device may be configured such that its bandwidth used for communication is smaller or narrower than that of the NR device (Bandwidth reduction).

In Rel. 15, a UE (NR device) needs to support a given bandwidth, according to a frequency domain (for example, FR1, FR2) and a subcarrier spacing. The bandwidth that the UE needs to support may be referred to as a mandatory bandwidth, or a mandatory BW.

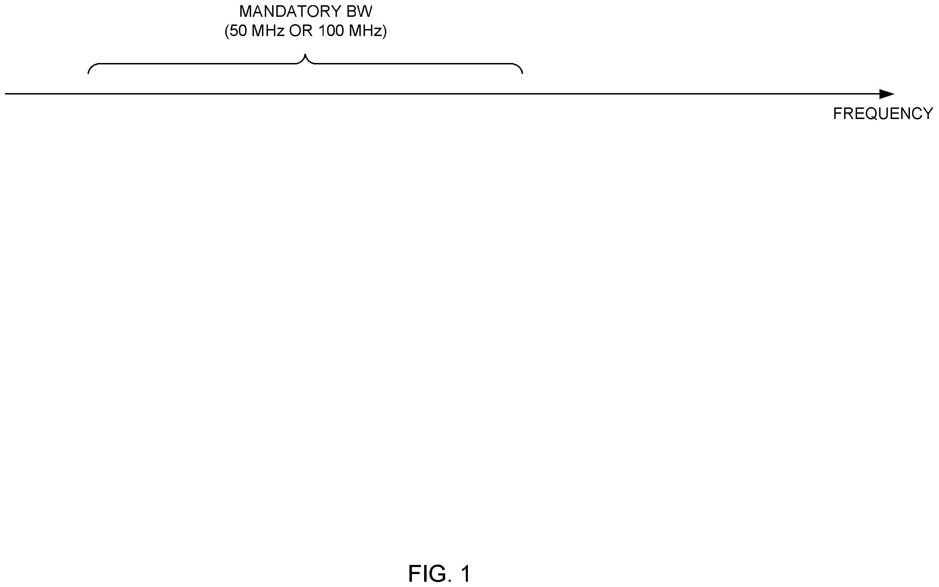

For example, in a first frequency domain (FR1), the UE needs to support a bandwidth of approximately 100 MHz for subcarrier spacings of 30 KHz and 60 KHz and a bandwidth of approximately 50 MHz for a subcarrier spacing of 15 KHz (see FIG. 1). In a second frequency domain (FR2), the UE needs to support a bandwidth of approximately 200 MHz for subcarrier spacings of 60 KHz and 120 KHz.

In contrast, it can be considered that a bandwidth (for example, the mandatory bandwidth) supported by the NR light device is configured to be narrower than the bandwidth supported by the UE in Rel. 15. In other words, the size of the bandwidth supported by the NR light device may be reduced in comparison to that of the NR device. With this, a load of reception processing or transmission processing of a signal in the NR light device can be reduced.

However, how to configure (or reduce) required conditions of communication for the NR light device has not yet been fully studied. For example, when a bandwidth (reduced BW) narrower than the bandwidth supported by the NR device is configured for the NR light device, how to configure the size of the bandwidth or the position of the bandwidth poses a problem.

The inventors of the present invention focused on a point that a given signal in NR (for example, Rel. 15) may be used in a use case in which a required condition is reduced, and, as an aspect of the present invention, came up with the idea of configuring a bandwidth supported by an NR light device in consideration of a parameter of the given signal. The given signal may be, for example, a signal (for example, a synchronization signal block) used in cell selection, initial connection, or the like, or may be another signal.

Alternatively, as another aspect of the present invention, the inventors of the present invention came up with the idea of operation of the NR light device when the bandwidth supported by the NR light device is configured in consideration of the given signal (for example, the synchronization signal block).

Alternatively, as another aspect of the present invention, the inventors of the present invention came up with the idea of controlling communication by the NR light device performing given operation when the bandwidth supported by the NR light device is configured without consideration of the given signal (for example, the synchronization signal block).

Embodiments according to the present disclosure will be described in detail below with reference to the drawings. A radio communication method according to each embodiment may be individually applied, or may be applied in combination. In the following description, as a parameter for performing reduction of a required condition supported by the UE (for example, the NR device) in Rel. 15, a bandwidth is taken as an example. However, this is not restrictive. The present disclosure may be applied to a parameter other than a bandwidth.

In the following description, a downlink (DL) is mainly taken as an example; however, the present disclosure may be applied to an uplink (UL). In the following description, as a given signal, a synchronization signal block (for example, an SSB or an SS/PBCH block) is mainly taken as an example. However, this is not restrictive. The present disclosure may be applied with the synchronization signal block being replaced by another DL signal or a UL signal (for example, a PRACH or the like).

### (First Aspect)

A first aspect will describe a case in which the size of the bandwidth (for example, the mandatory BW) supported by the NR light device or required for the NR light device is defined to at least cover the bandwidth size necessary for transmission of a given signal.

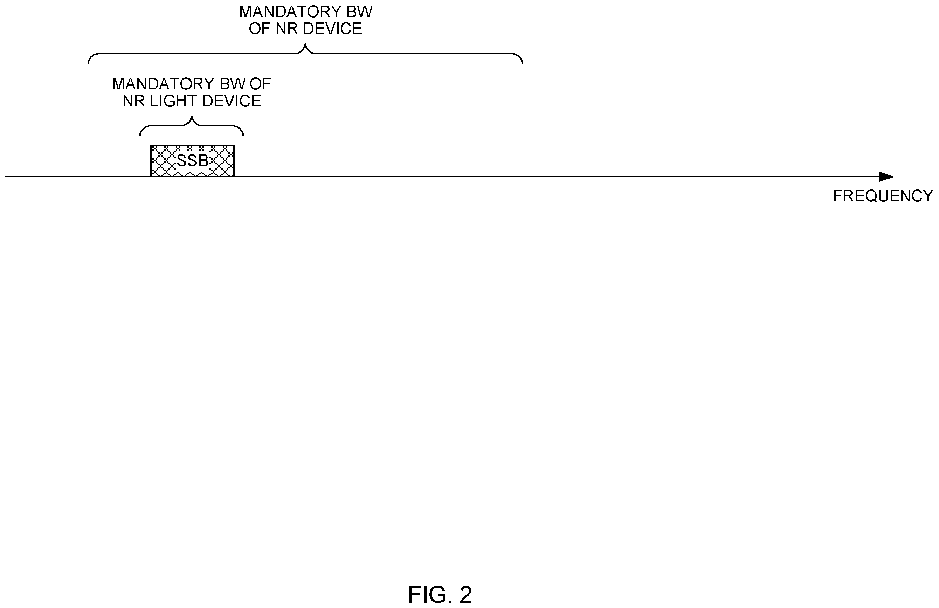

The size of the bandwidth (for example, the mandatory BW) for the NR light device may be configured to be equal to or larger than that of the bandwidth (or the frequency domain) used for transmission of at least a synchronization signal block (SSB) and smaller than that of the mandatory BW of the NR device (for example, the UE of Rel. 15) (see FIG. 2). When the synchronization signal block is configured with a given number of resource blocks (for example, 20 PRBs) in the frequency domain, the bandwidth size of the NR light device may be configured or defined to be equal to or larger than 20 PRBs.

The size of the bandwidth for the NR light device may be configured or defined based on at least one of a frequency range and a subcarrier spacing. For example, the size may be configured or defined as shown in at least one of the following sizes 1-1 to 1-4. The following sizes 1-1 to 1-4 may be defined in a specification, or may be configured by a base station for the UE (for example, the NR light device).

### <Size 1-1>

In FR1, the bandwidth size for the NR light device may be configured (or defined) regardless of the subcarrier spacing. In other words, a common bandwidth size may be configured for a plurality of subcarrier spacings. For example, as the bandwidth size for the NR light device, approximately 10 MHz or approximately 20 MHz may be configured.

For example, among the subcarrier spacings that can be supported or applied by the NR light device, a transmission band of a synchronization signal block when the maximum subcarrier spacing is used (or the frequency domain used for transmission of the synchronization signal block) may be configured or defined as the mandatory BW. When the NR light device supports the subcarrier spacings of 15 KHz, 30 KHz, and 60 KHz, the size of the bandwidth (approximately 20 MHz) of SSB transmission when the subcarrier spacing of 60 KHz is used may be used as the mandatory BW.

Alternatively, when the NR light device supports the subcarrier spacings of 15 KHz and 30 KHz, the size of the bandwidth (approximately 10 MHz) of SSB transmission when the subcarrier spacing of 30 KHz is used may be used as the mandatory BW.

The NR light device may perform reception processing of the DL and transmission processing of the UL by using the bandwidth of the mandatory BW size (or at least the mandatory BW size or larger). The reception processing of the DL may be reception of a synchronization signal block, data (for example, a PDSCH or a DL-SCH), or the like.

In this manner, by configuring or defining the BW size supported by the NR light device regardless of the subcarrier spacing (for example, to be common to two or more subcarrier spacings), transmission and reception of the NR light device can be simplified.

### <Size 1-2>

In FR1, the bandwidth size for the NR light device may be configured (or defined) according to the subcarrier spacing. In other words, when the NR light device supports a plurality of subcarrier spacings, the bandwidth (for example, mandatory BW) size may be configured for each subcarrier spacing.

When the NR light device supports the subcarrier spacings of 15 KHz, 30 KHz, and 60 KHz, the mandatory BW size corresponding to the subcarrier spacing of 15 KHz may be 5 MHz, the mandatory BW size corresponding to the subcarrier spacing of 30 KHz may be 10 MHz, and the mandatory BW size corresponding to the subcarrier spacing of 60 KHz may be 20 MHz.

Note that a common mandatory BW size (for example, 10 MHz) may be configured for a part of the plurality of subcarrier spacings (for example, the subcarrier spacings of 15 KHz and 30 KHz) and another mandatory BW size (for example, 20 MHz) may be configured for another subcarrier spacing (for example, the subcarrier spacing of 60 KHz).

In this manner, by configuring or defining the BW size supported by the NR light device according to the subcarrier spacing (for example, separately for two or more subcarrier spacings), transmission of the NR light device can be flexibly controlled. With this, communication can be performed using the mandatory BW appropriate for each use case.

### <Size 1-3>

In FR2, the bandwidth size for the NR light device may be configured (or defined) regardless of the subcarrier spacing. In other words, a common bandwidth size may be configured for a plurality of subcarrier spacings. For example, as the bandwidth size for the NR light device, approximately 50 MHz or approximately 100 MHz may be configured.

For example, among the subcarrier spacings that can be supported or applied by the NR light device, a transmission band of a synchronization signal block when the maximum subcarrier spacing is used (or the frequency domain used for transmission of the synchronization signal block) may be configured or defined as the mandatory BW. When the NR light device supports the subcarrier spacings of 60 KHz, 120 KHz, and 240 KHz, the size of the bandwidth (approximately 100 MHz) of SSB transmission when the subcarrier spacing of 240 KHz is used may be used as the mandatory BW.

Alternatively, when the NR light device supports the subcarrier spacings of 60 KHz and 120 KHz, the size of the bandwidth (approximately 50 MHz) of SSB transmission when the subcarrier spacing of 120 KHz is used may be used as the mandatory BW.

In this manner, by configuring or defining the BW size supported by the NR light device regardless of the subcarrier spacing (for example, to be common to two or more subcarrier spacings), transmission and reception of the NR light device can be simplified.

### <Size 1-4>

In FR2, the bandwidth size for the NR light device may be configured (or defined) according to the subcarrier spacing. In other words, when the NR light device supports a plurality of subcarrier spacings, the bandwidth (for example, mandatory BW) size may be configured for each subcarrier spacing.

When the NR light device supports the subcarrier spacings of 60 KHz, 120 KHz, and 240 KHz, the mandatory BW size corresponding to the subcarrier spacing of 60 KHz may be 25 MHz (or 20 MHz), the mandatory BW size corresponding to the subcarrier spacing of 120 KHz may be 50 MHz, and the mandatory BW size corresponding to the subcarrier spacing of 240 KHz may be 100 MHz.

Note that a common mandatory BW size (for example, 50 MHz) may be configured for a part of the plurality of subcarrier spacings (for example, the subcarrier spacings of 60 KHz and 120 KHz) and another mandatory BW size (for example, 100 MHz) may be configured for another subcarrier spacing (for example, the subcarrier spacing of 240 KHz).

In this manner, by configuring or defining the BW size supported by the NR light device according to the subcarrier spacing (for example, separately for two or more subcarrier spacings), transmission of the NR light device can be flexibly controlled. With this, communication can be performed using the mandatory BW appropriate for each use case.

### <UE Capability Information>

UE capability information related to the bandwidth size that can be applied by the NR light device may be supported. For example, the NR light device may report information (for example, the mandatory BW size) related to the bandwidth supported by the terminal itself to a network (for example, the base station).

As the UE capability information related to the bandwidth size, at least one of the bandwidth size of the DL (for example, supportedBandwidthDL) and the bandwidth size of the UL (for example, supportedBandwidthUL) may be supported. The UE capability information related to the bandwidth size of the DL and the UE capability information related to the bandwidth size of the UL may be configured (or reported) to be common, or may be separately configured.

The UE capability information (for example, the UE capability information related to the bandwidth size) of the NR light device may be separately configured for each of a plurality of use cases, or may be configured to be common regardless of the use cases. The plurality of use cases may be a first use case (for example, an industrial wireless sensor NW, a second use case (for example, a video surveillance system), a third use case (for example, a wearable device), or the like. As a matter of course, the number of types of separately configured use cases is not limited to three, and may be two or may be four or more.

Note that the NR light device may report another kind of UE capability information, not only the applicable bandwidth size (for example, the mandatory BW size). Such another kind of UE capability information may be, for example, capability information (for example, supportedModulationOrder) related to a supported modulation scheme, or may be a power class (for example, powerclass).

### (Second Aspect)

A second aspect will describe a configuration of the size and the position of the bandwidth (for example, the mandatory BW) that is supported by the NR light device or configured for the NR light device.

At least one of the bandwidth size and the position (for example, the frequency domain, the RB, or the like) configured for the NR light device may be determined in consideration of a given signal (for example, configuration 2-1), or may be determined without consideration of a given signal (for example, configuration 2-2). The given signal may be, for example, a synchronization signal block, or may be another signal or channel.

### <Configuration 2-1>

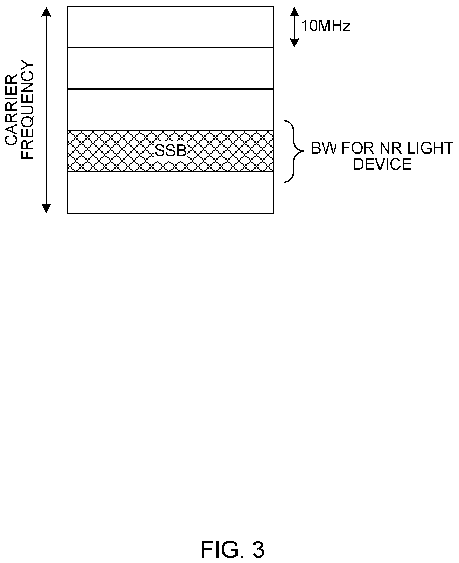

When the bandwidth size and the position are determined in consideration of a synchronization signal block, for example, the bandwidth size and the position of the bandwidth may be controlled so that the frequency domain in which the synchronization signal block is transmitted (or allocated) is included (see FIG. 3). In other words, the bandwidth size and the position of the bandwidth covering the synchronization signal block (for example, the entire frequency domain in which the synchronization signal block is transmitted) are configured for the NR light device.

FIG. 3 shows an example of the bandwidth size and the position used by the NR light device when the subcarrier spacing of 30 KHz is applied in FR1. FIG. 3 shows a case in which the synchronization signal block is transmitted in a given frequency domain (in a range of approximately 10 MHz) when a carrier BW size is 50 MHz.

In this case, the bandwidth (for example, mandatory BW) size may be configured or defined to cover at least the frequency domain (approximately 10 MHz) of the synchronization signal block. As an example, the mandatory BW size of approximately 10 MHz may be configured or defined for the NR light device.

The position of the bandwidth configured for the NR light device may be configured to include the entire frequency domain in which the synchronization signal block is transmitted. The bandwidth configured for the NR light device may be reported from the network (for example, the base station). For example, the base station may notify the NR light device of information related to at least one of the size and the position of the bandwidth by using higher layer signaling or the like.

The information related to the position of the bandwidth may be a resource block (for example, starting PRB) index being a start position of the bandwidth and a resource block (for example, ending PRB) index being an end position. Alternatively, the information related to the position of the bandwidth may be a resource block (for example, starting PRB) index being a start position of the bandwidth and the number of resource blocks (for example, the number of PRBs) corresponding to the size of the bandwidth.

In this manner, with the bandwidth size and the position being controlled to cover the frequency domain of the synchronization signal block, the NR light device can appropriately receive the synchronization signal block even when the mandatory BW size supported by the NR light device is made smaller than the mandatory BW size supported by the NR device.

### <Configuration 2-2>

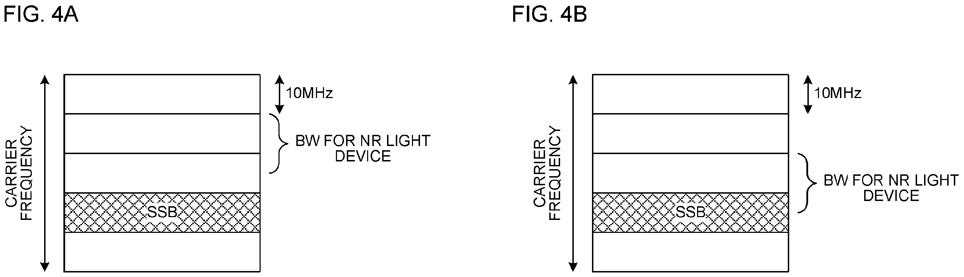

When at least one of the bandwidth size and the position is determined without consideration of the synchronization signal block, for example, configuration of the bandwidth size and the position of the bandwidth so that the frequency domain in which the synchronization signal block is transmitted is not included may be allowed (see FIGS. 4A and 4B). In other words, at least one of the size other than the bandwidth size covering the synchronization signal block (for example, the entire frequency domain in which the synchronization signal block is transmitted) and the position other than the bandwidth position covering the synchronization signal block may be configured for the NR light device.

FIG. 4A shows a case in which the position of the bandwidth is configured so as not to include the frequency domain in which the synchronization signal block is transmitted. FIG. 4B shows a case in which the position of the bandwidth is configured so as to include only a part of the frequency domain in which the synchronization signal block is transmitted.

Note that FIGS. 4A and 4B show a case in which the bandwidth (mandatory BW) size supported by the NR light device is equal to or larger than the size (for example, 10 MHz) of the frequency domain in which the synchronization signal block is transmitted. However, this is not restrictive. A configuration in which the mandatory BW size is configured to be smaller than the size of the frequency domain in which the synchronization signal block is transmitted may be allowed.

Configuration 2-2 may be applied on a given condition or case. In other words, the NR light device may apply at least one of the mandatory BW size and the BW position of configuration 2-2 when a given condition or case is satisfied. The NR light device that allows application of configuration 2-2 may apply a combination of configuration 2-1 and configuration 2-2.

The given condition or case may be at least one of UE capability, a UE status, a frequency range, a network configuration (NW configuration), and a network architecture (NW architecture) .

The UE capability may be UE capability related to support of switch (for example, BWP switching) of the bandwidth or the frequency domain. For example, application of configuration 2-2 may be allowed for the NR light device supporting BWP switching. As an example, for the NR light device, a first frequency position covering the frequency domain of the synchronization signal block and a second frequency position not covering the frequency position of the synchronization signal block may be configured.

Alternatively, the UE capability may be UE capability information related to support of the bandwidth without the synchronization signal block (BW without SSB). Alternatively, the UE capability may be UE capability information related to support of frequency retuning from a given resource (for example, RB) to another resource.

The UE status may be at least one of presence or absence of low mobility and the position at which the UE is present (for example, whether or not the UE is present at a cell edge). For example, application of configuration 2-2 may be allowed for the NR light device with low mobility. Alternatively, application of configuration 2-2 may be allowed for the NR light device located at a place (for example, a cell center) other than a cell edge.

Whether or not configuration 2-2 is applied may be determined based on a frequency range used by the NR light device. For example, for the NR light device, the bandwidth size and the position covering the synchronization signal block may be configured in a given frequency range, and at least one of the bandwidth size and the position not covering the synchronization signal block may be configured in another frequency range.

As an example, the NR light device may apply the bandwidth size and the position (configuration 2-1) including the entire frequency domain of the synchronization signal block in the first frequency range (for example, FR1), and may apply at least one of the bandwidth size and the position (configuration 2-2) not covering the synchronization signal block in the second frequency range (for example, FR2).

Whether or not configuration 2-2 is applied may be determined based on the number of cells (or CCs) configured for the NR light device. In other words, whether or not configuration 2-2 is applied may be determined based on whether or not carrier aggregation (CA) or dual connectivity (DC) is applied. For example, when the number of cells configured for the NR light device (or used by the NR light device) is one, configuration 2-1 is applied in the cell. In contrast, when the number of cells is more than one, configuration 2-1 is applied in a given cell, and application of configuration 2-2 may be allowed in another cell(s).

Alternatively, whether or not configuration 2-2 is applied may be determined based on a type of dual connectivity. For example, configuration 2-1 may be applied in NE-DC in which a PCell uses NR and a PSCell uses LTE, and application of configuration 2-2 may be allowed in NE-DC in which a PCell uses LTE and a PSCell uses NR.

In this manner, by allowing application of at least one of the bandwidth size and the position (configuration 2-2) not covering the synchronization signal block, the bandwidth size and the position configured for the NR light device can be flexibly configured. With this, throughput of communication and the like can be enhanced.

### (Third Aspect)

A third aspect will describe an example of operation of the NR light device when the size of the bandwidth (for example, the mandatory BW) for the NR light device is configured or defined to be wider than the frequency domain of the synchronization signal block (for example, covers the synchronization signal block).

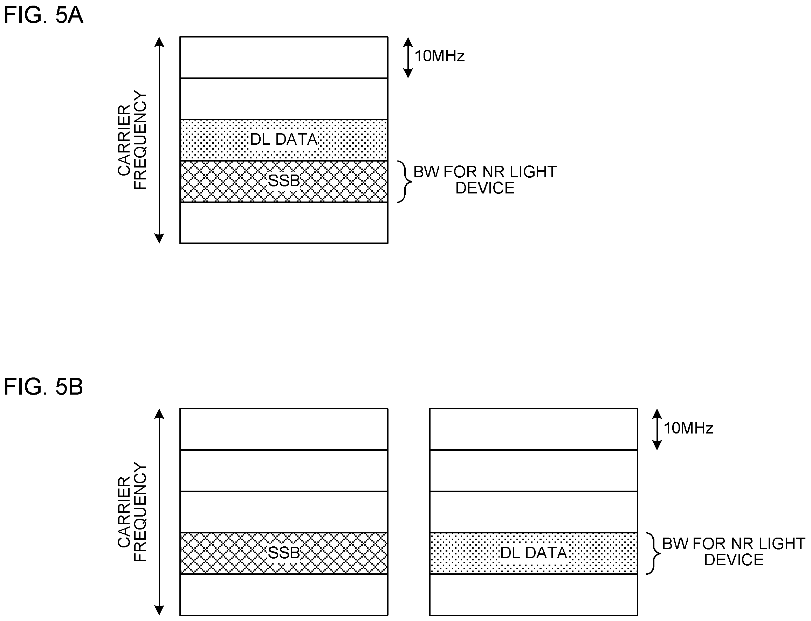

When the size of the bandwidth configured for the NR light device is small (for example, when the size is nearly as large as the frequency range to which the synchronization signal block is mapped), it is difficult to receive other DL transmission at least in a transmission period period (for example, an SSB transmission opportunity) of the synchronization signal block (see FIG. 5A). FIG. 5A shows a case in which the bandwidth size supported by the NR light device is nearly as large as the frequency domain of the synchronization signal block, and the position of the bandwidth configured for the NR light device is controlled to cover the frequency domain of the synchronization signal block.

In such a case, even if the synchronization signal block and other DL transmission (for example, DL data) are multiplexed by frequency multiplexing, the NR light device cannot receive such other DL transmission. Thus, the synchronization signal block and the DL data need to be multiplexed by time multiplexing all the time (see FIG. 5B). When the NR light device is configured with the bandwidth position covering the synchronization signal block all the time as described above, the NR light device may fail to receive other DL transmission in a transmission opportunity of the synchronization signal block, which may cause a delay.

In view of this, in the third aspect, the bandwidth (cell/CC BW) of a cell or a carrier is divided into a plurality of bandwidths, and the NR light device uses (for example, switches) the plurality of divided bandwidths, so as to perform reception of other DL transmission in the SSB transmission opportunity. The divided bandwidth may be referred to as a sub-bandwidth, a subBW, a sub-BW, a bandwidth part, or a BWP. In the following description, the divided bandwidth is referred to as a BWP. However, this is not restrictive.

The NR light device performs reception of a DL signal and transmission of a UL signal by using at least one BWP out of a plurality of BWPs. Of the plurality of BWPs, the synchronization signal block may be transmitted in a first BWP, and other DL transmission (for example, DL data, a PDSCH, or a DL-SCH) may be transmitted in another BWP (for example, a second BWP). The sizes (for example, the BW sizes) of the BWPs in the frequency direction may be the same or different from each other.

The NR light device may switch between the plurality of BWPs, based on a given condition. For example, the NR light device may use at least one of the following operation 3-1 to operation 3-3.

### <Operation 3-1>

The NR light device may determine the bandwidth (or switching of the BWP) used for a given period, based on a notification from the base station. For example, the base station may notify the NR light device of information related to the BWP used by the NR light device (or monitored by the NR device) by including the information in downlink control information. The NR light device may determine at least one of the BWP used for reception of a DL signal and the BWP used for transmission of a UL signal, based on the information related to the BWP included in the downlink control information.

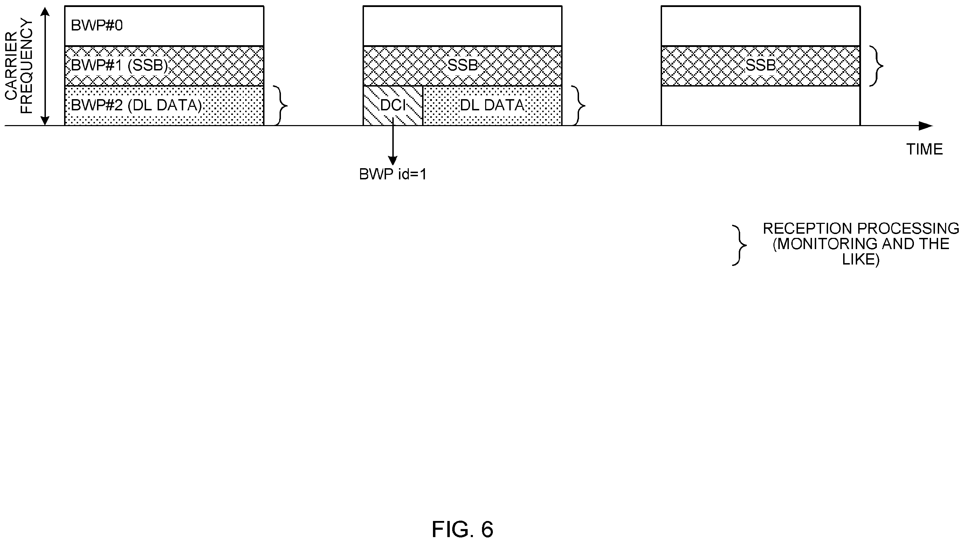

The information related to the BWP may be an index indicating the BWP (see FIG. 6). FIG. 6 shows an example of a case in which the NR light device monitors any of a plurality of BWPs (here, BWPs #0, #1, and #2) and receives a DL signal.

FIG. 6 shows a case in which the NR light device monitors BWP #2 in a first period and a second period and monitors BWP #1 in a third period, and controls reception of the DL. The synchronization signal block is transmitted in BWP #1, and other DL transmission (for example, DL data) is transmitted in BWP #2.

When information for indicating switching to BWP #1 (for example, information for indicating BWP #1) is included in DCI transmitted in BWP #2 of the second period, the NR light device changes the BWP to monitor in the subsequent transmission periods (here, the third transmission period). Here, the NR light device monitors BWP #1 in the third transmission period, and controls reception of the synchronization signal block.

After the NR light device performs switching of the BWP (here, switching from BWP #2 to BWP #1), the NR light device may continue reception processing in the BWP after switching (here, BWP #1) until an indication of the next switching is provided. Alternatively, after the NR light device performs switching based on DCI, the NR light device may restore to the BWP before switching (here, BWP #2) after a given period (or a given timer) has elapsed.

By controlling switching of the BWP using downlink control information, the BWP in which the NR light device performs reception processing (for example, monitoring and the like) can be dynamically changed.

### <Operation 3-2>

The NR light device may determine the bandwidth (or switching of the BWP) used for a given period, based on higher layer signaling notified from the base station. For example, the base station may notify the NR light device of information related to the BWP used by the NR light device (or monitored by the NR device) by using higher layer signaling.

The NR light device may determine at least one of the BWP used for reception of a DL signal and the BWP used for transmission of a UL signal, based on the information notified using higher layer signaling.

The higher layer signaling may be at least one of a higher layer parameter related to a cell-specific synchronization signal block transmission configuration (for example, a cell-specific SSB configuration) and a higher layer parameter related to a UE-specific synchronization signal block measurement configuration (UE-specific SSB measurement configuration).

The NR light device may determine the BWP in which the synchronization signal block is transmitted, based on the higher layer parameter related to the cell-specific synchronization signal block transmission configuration. The NR light device may determine measurement timing (or an offset) and periodicity of the synchronization signal block, based on the higher layer parameter related to the measurement configuration.

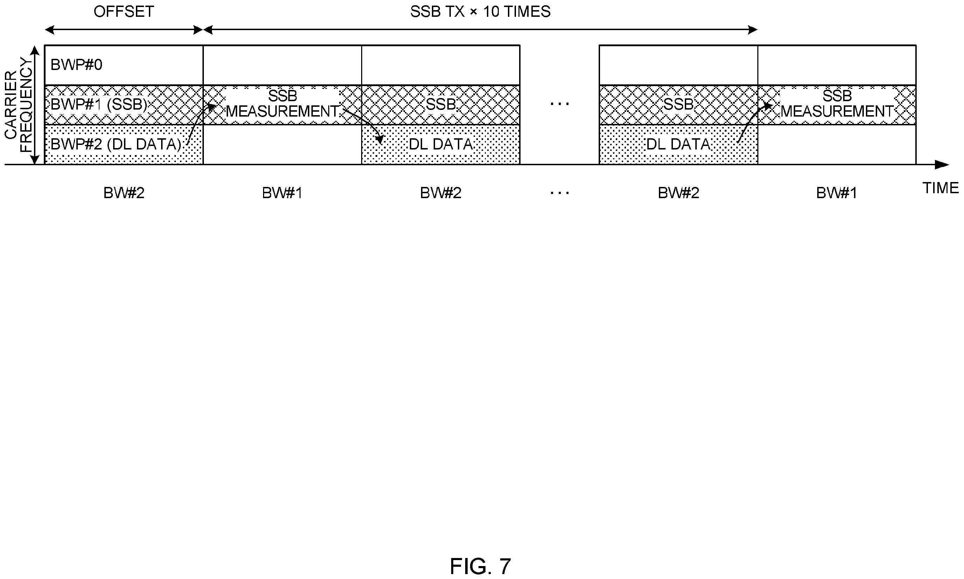

In this case, the NR light device may perform control so as to monitor the BWP in which the synchronization signal block is transmitted at timing of performing measurement of the synchronization signal block to receive the synchronization signal block, and monitor another BWP in another period to receive other DL transmission (see FIG. 7).

FIG. 7 shows an example of reception operation of the NR light device when measurement of given periodicity (here, one measurement in every ten SSB transmission opportunities) is configured for the NR light device. Note that the SSB transmission opportunities may be configured in consecutive time intervals (for example, slots, mini-slots, sub-slots, symbols, or the like), or may be configured in non-consecutive time intervals. When the SSB transmission opportunities are configured in a given BWP of non-consecutive time intervals, a DL signal different from the synchronization signal block may be allocated to a given BWP in a period between a plurality of SSB transmission periods.

The NR light device monitors BWP #1 in the SSB transmission opportunity after a measurement offset notified in a higher layer, and receives the synchronization signal block. The NR light device may perform control so as to switch to another BWP (BWP #2) in the next SSB transmission opportunity to receive other DL transmission (for example, DL data). Subsequently, the NR light device may perform control so as to switch to BWP #1 once every measurement period of the synchronization signal block to perform reception of the synchronization signal block.

In other words, the NR light device performs control so as to receive the synchronization signal block in BWP #1 once every ten SSB transmission opportunities, and receive other DL transmission in another BWP in another period.

In this manner, by limiting reception of the synchronization signal block (or monitoring of the BWP in which the synchronization signal block is configured) to timing at which measurement is necessary and performing reception of other DL transmission (or monitoring of another BWP) at another timing, other DL transmission can be appropriately received. With this, even when the bandwidth size configured for the NR light device is small, a delay of reception of a DL signal can be prevented.

### <Operation 3-3>

The NR light device may determine the bandwidth (or switching of the BWP) used for a given period, based on a given condition or timer.

For example, a given timer for the bandwidth in which the synchronization signal block is not transmitted may be introduced, and the bandwidth in which the NR light device performs reception processing may be controlled based on the timer.

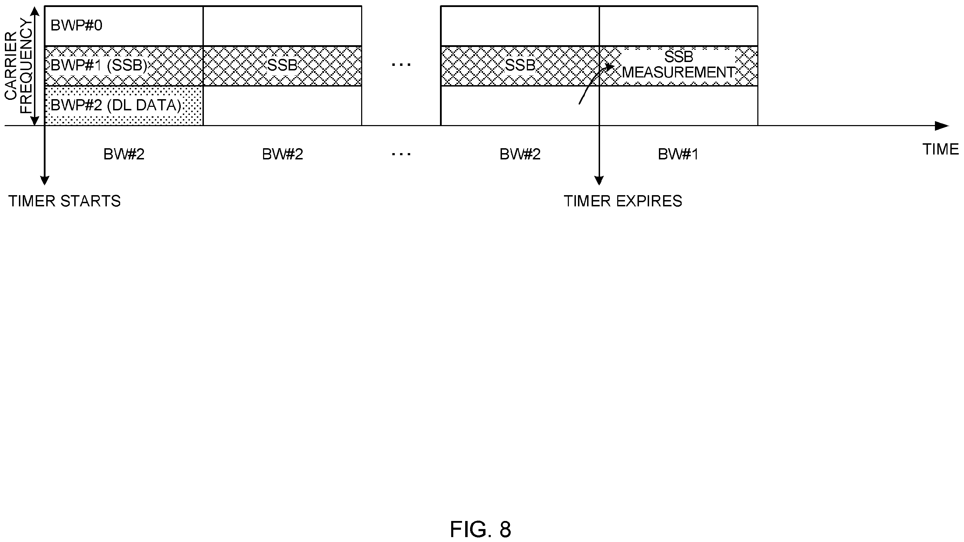

The given timer may be started when there is another DL signal (for example, DL data) different from the synchronization signal block (for example, when the NR light device receives another DL signal). In this case, the NR light device may monitor a BWP (for example, BWP #2) that is different from the BWP (for example, BWP #1) for the synchronization signal block while the given timer is running, and may monitor the BWP (for example, BWP #1) for the synchronization signal block when the given timer expires (see FIG. 8).

Note that, when the NR light device receives DL data while the given timer is running, the NR light device may resume the given timer. In this case, when the NR light device does not receive DL data in a given period (for example, a period corresponding to the given timer), the NR light device switches (or switches back) the BWP in order to receive the synchronization signal block.

The NR light device may determine whether or not to switch to the BWP other than BWP #1 for the synchronization signal block, based on a given condition (for example, a notification using DCI shown in operation 3-1).

Alternatively, in a given state, the NR light device may perform control so as to switch the BWP (for example, BWPP #1) in which the synchronization signal block is transmitted to perform measurement. In a case other than the above (for example, when the given state is not satisfied), the NR light device may perform reception processing in the BWP (for example, BWP #2) in which another DL signal is transmitted.

The given condition may correspond to a case in which an unscheduled period exceeds a given period (for example, T), a case in which reception processing (for example, decoding processing) fails a given number of times or more, or a case in which DTX or NACK is received after UL transmission is performed a given number of times (for example, N times).

The NR light device may determine whether or not to switch to the BWP other than BWP #1 for the synchronization signal block, based on the given condition (for example, the notification using DCI shown in operation 3-1).

Alternatively, when beam measurement based on the synchronization signal block is triggered or activated, when a beam link failure is detected, or when another TCI state is activated or notified, the NR light terminal may perform control so as to switch to the BWP (for example, BWPP #1) in which the synchronization signal block is transmitted to perform measurement. In a case other than the above, the NR light device may perform reception processing in the BWP (for example, BWP #2) in which another DL signal is transmitted.

In this manner, by adopting the configuration of performing reception of the synchronization signal block (or monitoring of the BWP in which the synchronization signal block is configured) when the given condition is satisfied, other DL transmission can be appropriately received. With this, even when the bandwidth size configured for the NR light device is small, a delay of reception of a DL signal can be prevented.

### (Fourth Aspect)

A fourth aspect will describe an example of operation of the NR light device when the size of the bandwidth (for example, the mandatory BW) for the NR light device is configured or defined to be narrower than the frequency domain of the synchronization signal block (for example, does not cover the synchronization signal block).

For example, for the NR light device satisfying the given condition, the configuration of the bandwidth size not covering the synchronization signal block may be allowed. The NR light device satisfying the given condition may be a terminal being a stationary device (stationary UE) and being a terminal with a satisfactory channel state, or a terminal with low mobility and a satisfactory channel state.

The terminal being the stationary device (stationary UE) and being a terminal with a satisfactory channel state or the terminal with low mobility and a satisfactory channel state may be, for example, a terminal whose moving speed is a given value or less, and/or whose at least one of received power (RSRP) and received quality (RSRQ) is higher than a given threshold in a given time interval (long time interval T). At least one of the given time interval and the given threshold may be configured using higher layer signaling.

When the bandwidth size not covering the synchronization signal block is configured, the NR light device may apply at least one of the following operation 4-1 and operation 4-2.

### <Operation 4-1>

The NR light device may be configured not to perform or not to be required to perform measurement using a normal synchronization signal block (normal SSB measurement). Alternatively, the NR light device may perform measurement of which condition is reduced compared to measurement of a normal synchronization signal block. The measurement of a normal synchronization signal block may be, for example, measurement required for the NR device of Rel. 15.

For example, in order to perform measurement using the synchronization signal block, the NR light device may switch to a bandwidth including the entire frequency domain of the synchronization signal block only for a given period. The given period may be a period shorter than a period necessary for normal measurement using the synchronization signal block. The given period may have longer periodicity than the periodicity when normal measurement using the synchronization signal block is performed.

Alternatively, communication may be controlled on the assumption that measurement results (RSRP/RSRQ) of the synchronization signal block are lower than the values assumed in Rel. 15.

### <Operation 4-2>

When the bandwidth configured for the NR light device includes only a part of the frequency domain of the synchronization signal block, measurement may be performed based on the synchronization signal block (partial SSB) received in the part of the frequency domain. In this case, measurement using a part of the synchronization signal blocks may be newly configured or defined.

For example, when measurement using the synchronization signal block that is mapped to a part of the frequency domain among transmitted synchronization signal blocks is performed, the number of synchronization signal blocks in the time domain used for measurement may be increased than that in normal measurement. In other words, in order to obtain measurement results of one synchronization signal block, a plurality of synchronization signal blocks may be measured in the time direction.

By increasing the number of samples of synchronization signal blocks in the time direction in measurement using the synchronization blocks, accuracy of measurement can be prevented from being deteriorated even when the synchronization signal blocks in a part of the frequency domain are used.

Alternatively, communication may be controlled on the assumption that measurement results (RSRP/RSRQ) of the synchronization signal block are lower than the values assumed in Rel. 15.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

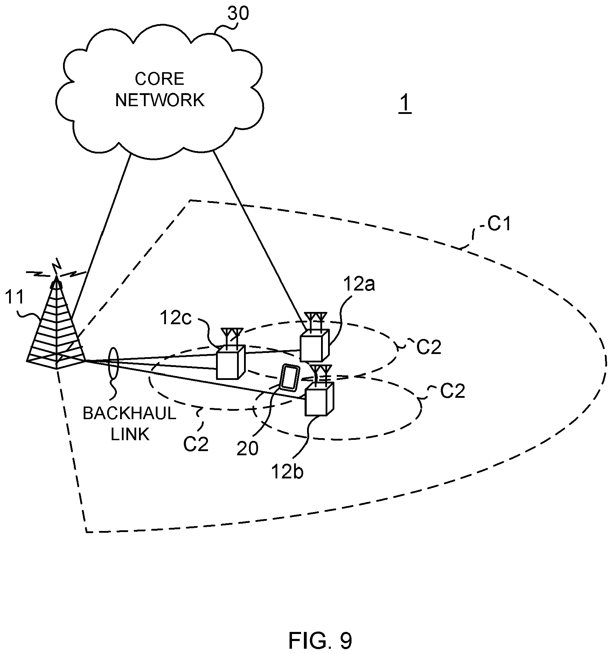

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 (for example, the NR light device) may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

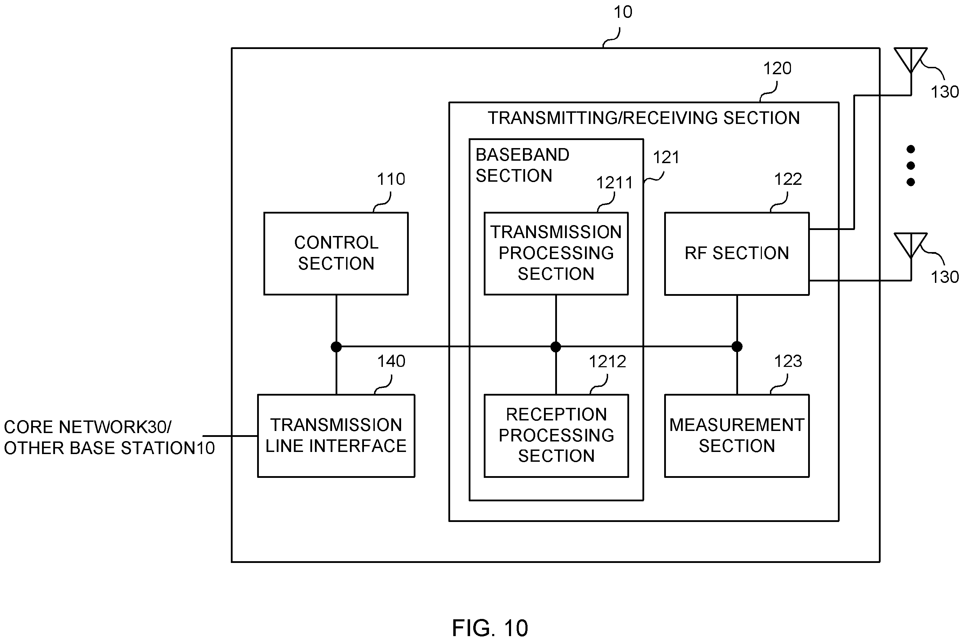

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of first information related to a size of a bandwidth used for reception of a DL signal and second information related to a position of the bandwidth. The transmitting/receiving section 120 may transmit the first information and the second information by using at least one of higher layer signaling and DCI.

The control section 110 may control transmission of the DL signal, based on at least one of the first information and the second information. The control section 110 may control the bandwidth of a DL so that the size of the bandwidth is equal to or larger than a size of a bandwidth to which a synchronization signal block is mapped and smaller than a bandwidth size of the DL supported in Rel. 15.

### (User Terminal)

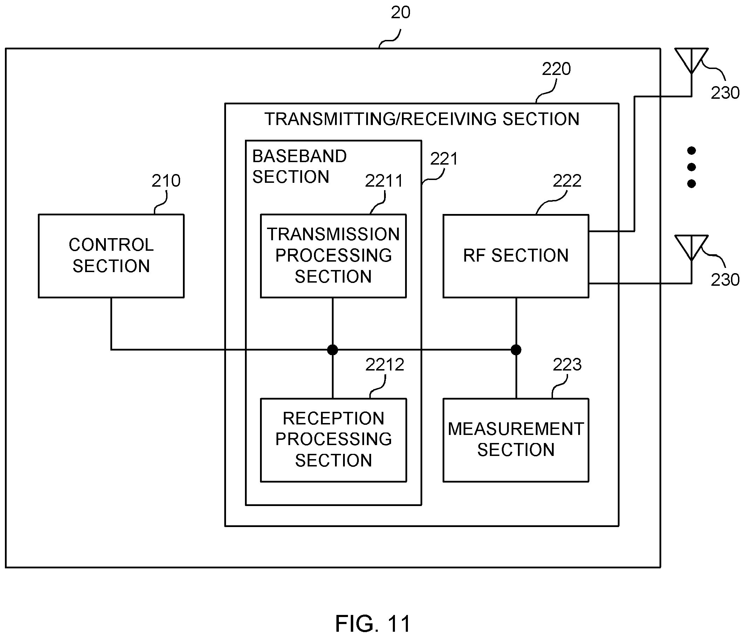

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of first information related to a size of a bandwidth used for reception of a DL signal and second information related to a position of the bandwidth. The first information and the second information may be transmitted by using at least one of higher layer signaling and DCI.

The control section 210 may control reception of the DL signal, based on at least one of the first information and the second information. The size of the bandwidth may be equal to or larger than a size of a bandwidth to which a synchronization signal block is mapped and smaller than a size of a given bandwidth (for example, a bandwidth size of a DL supported in Rel. 15) .

The size of the bandwidth may be configured to be common to two or more subcarrier spacings. Alternatively, the size of the bandwidth may be separately configured for each subcarrier spacing. Alternatively, the position of the bandwidth may be configured to overlap at least a part of a frequency domain in which the synchronization signal block is transmitted.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

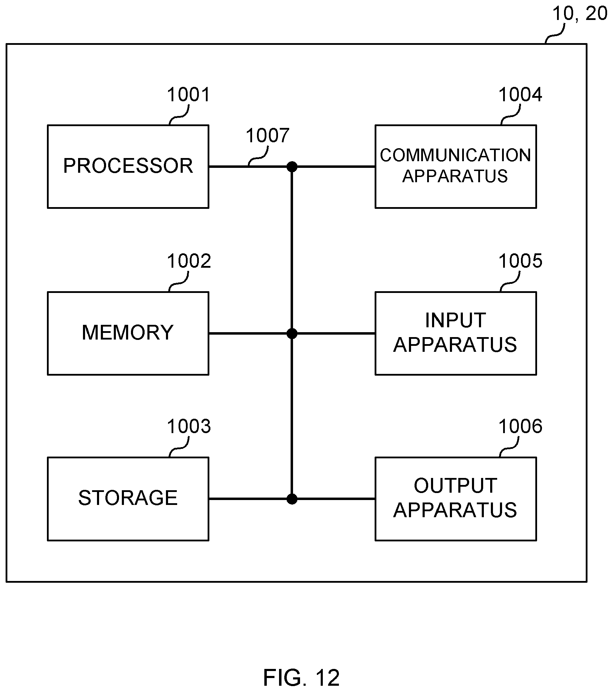

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives at least one of first information related to a size of a bandwidth used for reception of a DL signal and second information related to a position of the bandwidth; and
a control section that controls reception of the DL signal, based on at least one of the first information and the second information, wherein
the size of the bandwidth is equal to or larger than a size of a bandwidth to which a synchronization signal block is mapped and smaller than a bandwidth size of a DL supported in Rel. 15.

2. The terminal according to claim 1, wherein
the size of the bandwidth is configured to be common to two or more subcarrier spacings.

3. The terminal according to claim 1, wherein
the size of the bandwidth is separately configured for each subcarrier spacing.

4. The terminal according to any one of claims 1 to 3, wherein
the position of the bandwidth is configured to overlap at least a part of a frequency domain in which the synchronization signal block is transmitted.

5. A radio communication method comprising:
receiving at least one of first information related to a size of a bandwidth used for reception of a DL signal and second information related to a position of the bandwidth; and
controlling reception of the DL signal, based on at least one of the first information and the second information, wherein
the size of the bandwidth is equal to or larger than a size of a bandwidth to which a synchronization signal block is mapped and smaller than a bandwidth size of a DL supported in Rel. 15.

6. A base station comprising:
a transmitting section that transmits at least one of first information related to a size of a bandwidth used for reception of a DL signal and second information related to a position of the bandwidth; and
a control section that controls transmission of the DL signal, based on at least one of the first information and the second information, wherein
the size of the bandwidth is equal to or larger than a size of a bandwidth to which a synchronization signal block is mapped and smaller than a bandwidth size of a DL supported in Rel. 15.
